# EUROPEAN PATENT SPECIFICATION

(11) **EP 2 396 580 B1**
(45) Date of publication and mention of the grant of the patent: **15.03.2017**
(21) Application number: 09745010.0
(22) Date of filing: 23.10.2009
(51) Int. Cl.: F16K 37/00

(54) **FLUID-OPERATED ACTUATOR FOR CONTROLLING THE ACTUATION OF VALVES IN GENERAL**
DRUCKMITTELBETRIEBENER AKTUATOR ZUR STEUERUNG DER BETÄTIGUNG VON VENTILEN IM ALLGEMEINEN
ACTIONNEUR HYDRAULIQUE PERMETTANT DE COMMANDER L'ACTIONNEMENT DE SOUPAPES EN GÉNÉRAL

(30) Priority: 11.02.2009 IT MI20090173
(43) Date of publication of application: 21.12.2011
(73) Proprietor: Air Torque S.p.A., 24060 Costa di Mezzate (Bergamo) (IT)
(72) Inventor: ROTA, Santo, I-24061 Albano Sant' Alessandro (IT); PARIS, Ignazio, I-24064 Grumello Del Monte (IT); MARINONI, Antonio, I-24064 Grumello Del Monte (IT)
(74) Representative: Modiano, Micaela Nadia
(86) International application number: PCT/EP2009/064009
(87) International publication number: WO 2010/091748

(56) References cited:
- EP-A2- 1 394 419
- CH-A- 213 475
- US-A- 2 239 842
- US-A- 3 356 105
- US-A- 5 826 617

## Description

### Technical field

The present invention relates to a fluid-operated actuator for controlling the actuation of valves in general.

### Background art

As is known, fluid-operated actuators, used to control the actuation of valves in general, have an element for indicating the open and closed positions of the valve.

Currently, according to applicable statutory provisions, the valve stem can engage a seat that is formed at the lower end of the shaft of the actuator, which must be provided with a square shape and arranged so that its sides are respectively parallel and perpendicular to the direction of the actuation pistons provided in the fluid-operated actuator or optionally with the sides arranged at 45° with respect to the direction of motion of the pistons. Moreover, the valve coupling can be of the slot or keyed shaft type.

These different types of embodiments entail the need to have separate solutions, which during construction lead to the need to provide separate productions.

For solving the problem, EP 1 394 419, by the same Applicant, assumed to be included herein by reference, provides for the introduction of a cap made of plastic material, which forms a slot which acts as an element for indicating opening and closure and can further act as an entrainment element for any accessories.

The cap is arranged outside the upper end of the actuation shaft of the actuator, so that if it is necessary to resort to manual actuation it is necessary to remove the cap beforehand, which is usually connected by screw means, accordingly entailing relatively long time periods which can be detrimental to swiftness of intervention.

Another drawback consists in that the cap, which defines internally a seat formed by two square shapes offset by 45° so as to be able to orient itself according to the position required for the valve actuation seat, is necessarily made of plastic material, and therefore its stability of connection to the actuator and the possibility of entraining any accessories is limited drastically, also due to the fact that in many cases the actuator works under thermal conditions that are not suitable for the plastic material that is used.

### Disclosure of the Invention

The aim of the invention is to solve the problems described above, by providing a fluid-operated actuator for controlling the actuation of valves in general that allows rapid intervention by manual actuation, since one may not act with tools as a preventive measure.

Within this aim, an object of the invention is to provide an actuator in which it is possible to obtain a better mechanical performance in the entrainment of connected accessories, with the possibility of working even under conditions of relatively high temperature, where current indicators cannot be used.

Another object of the present invention is to provide a fluid-operated actuator which, due to its particular constructive characteristics, is capable of guaranteeing best reliability and safety in use.

Another object of the present invention is to provide a fluid-operated actuator that can be obtained easily starting from commonly commercially available elements and materials and is also competitive from a merely economic point of view.

In accordance with the invention, there is provided a fluid-operated actuator for controlling the actuation of valves in general, as defined in the appended claims.

### Brief Description of the Drawings

Further characteristics and advantages of the present invention will become better apparent from the description of a preferred but not exclusive embodiment of a fluid-operated actuator for controlling the actuation of valves in general, illustrated by way of non-limiting example in the accompanying drawings, wherein:

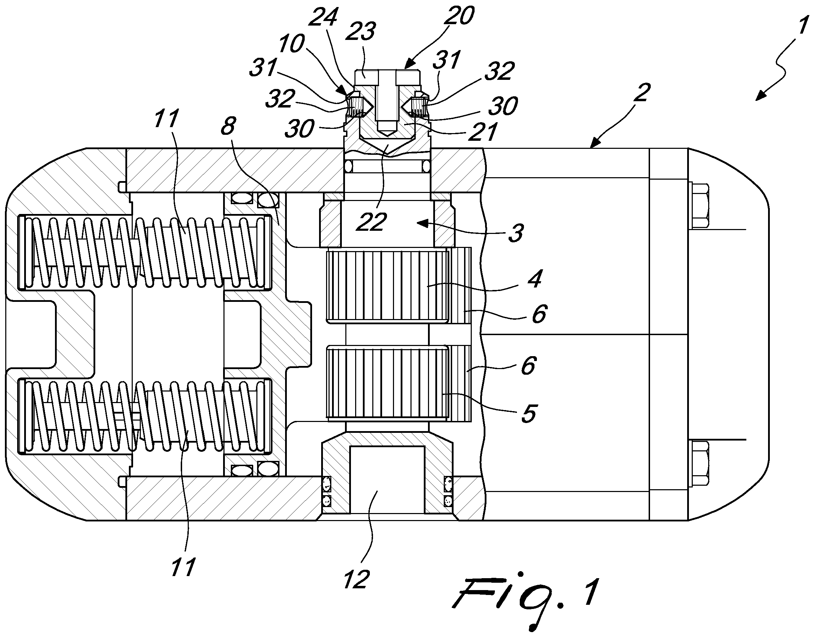

Figure 1 is a schematic partially sectional elevation view of a fluid-operated actuator with the element for indicating the open and closed positions;

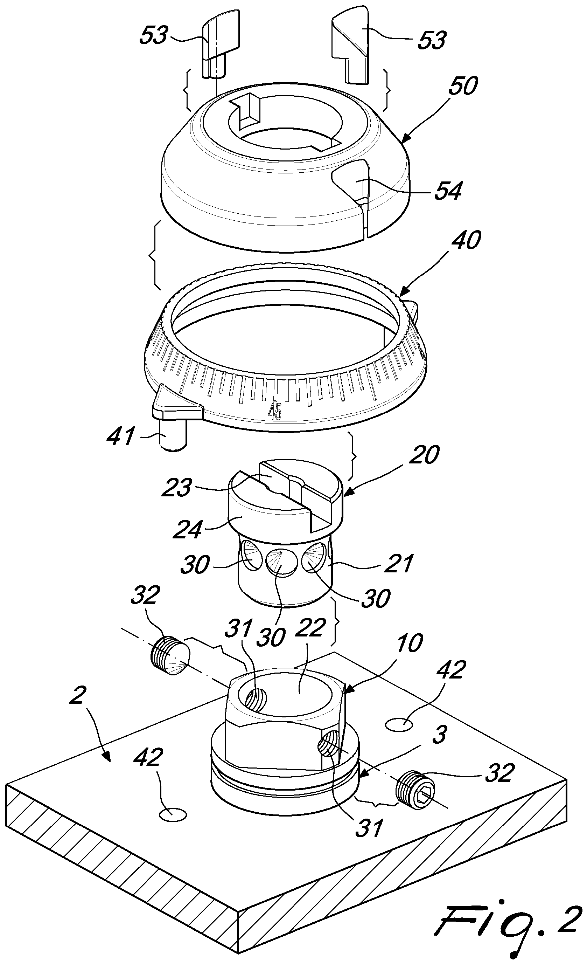

Figure 2 is a schematic exploded view of the indication element with the actuation shaft presenting the square portion arranged at 45° with respect to the sliding direction of the pistons;

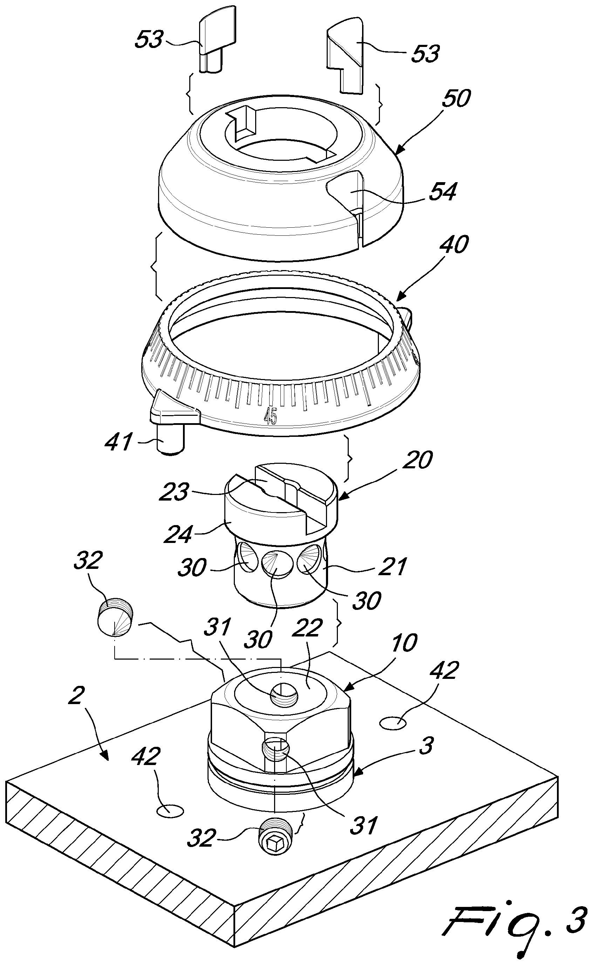

Figure 3 is an exploded view of the indication element with the square portion of the actuation shaft arranged with its sides respectively parallel and perpendicular to the direction of translational motion of the actuator;

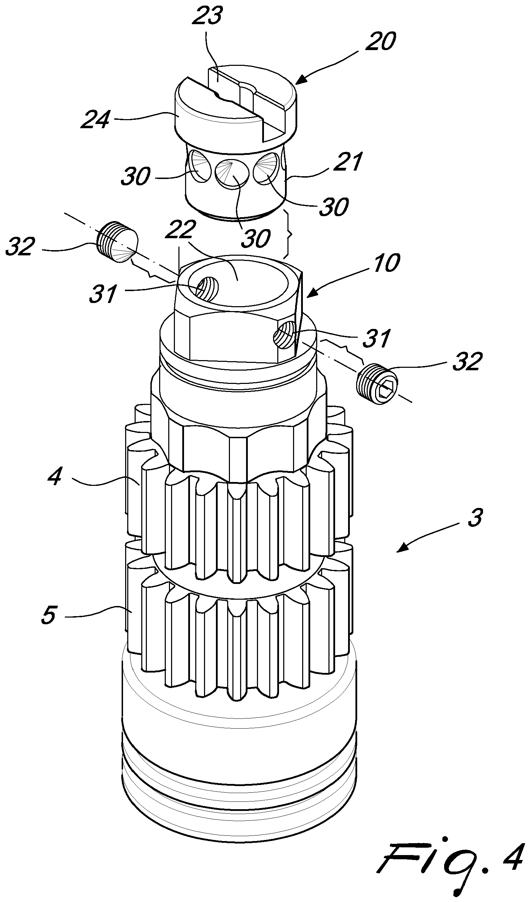

Figure 4 is an exploded perspective view of the actuation shaft and of the engagement element that forms the indication element;
Figure 5 is a perspective view, taken from below, of a cap which can be applied to provide a further indication;
Figure 6 is an enlarged-scale sectional view of the detail of the engagement element applied to the actuation shaft, with a goniometric ring and the cap applied;
Figures 7 and 8 are schematic plan views of the fluid-operated actuator, arranged respectively in axial alignment with the duct where the valve is applied and arranged at right angles with respect to such duct.

### Ways of carrying out the Invention

With reference to the figures, the fluid-operated actuator for controlling the actuation of valves in general, generally designated by the reference numeral 1, comprises, in a manner known per se, a body 2 inside which an actuation shaft 3 is arranged which forms a square portion 10 at the upper end, an engagement seat 12 for connection to the valve at the lower end, and, in a central portion, the usual pinions 4 and 5, which engage mutually opposite racks 6 and 7 connected to respective actuation pistons 8 and 9 which are actuated by means of fluids in contrast to the action of precompressed springs 11.

The particularity of the invention consists in that an element is provided for indicating the open and closed positions of the valve, which is provided by means of an engagement element 20, which has a cylindrical shank 21 that can be inserted in a cavity 22 formed at the square portion 10.

The engagement element 20, which is advantageously made of metallic material, is provided in an upper region with a base slot 23, which lies diametrically at the wider portion 24 which, with the engagement element arranged so that the shank 21 is inserted in the cavity 22, is superimposed on the end of the actuation shaft 3.

For allowing the positioning of the slot 23 that acts as an indication element as a function of the different arrangements offset by 45°, on the lateral surface of the shank 21 locking recesses 30 are provided, with a preferably frustum-shaped configuration, which are arranged at 45° to each other about the axis formed by the actuation shaft 3.

For locking, at the beveled vertices of the square portion 10 threaded seats 31 are provided in which it is possible to insert locking grubs 32, which make it possible to obtain a firm positioning of the engagement element with respect to the shaft; the seats 31 can optionally also be provided on the side of the square portion.

The assembly is completed by a goniometric ring 40, which is frustum-shaped and can be fitted externally to the end of the actuation shaft 10 below the region affected by the square portion 10 and is provided with positioning pins 41, which are inserted in reference seats 42 formed on the body 2 of the valve, so as to indicate visually the angle formed by the slot 23.

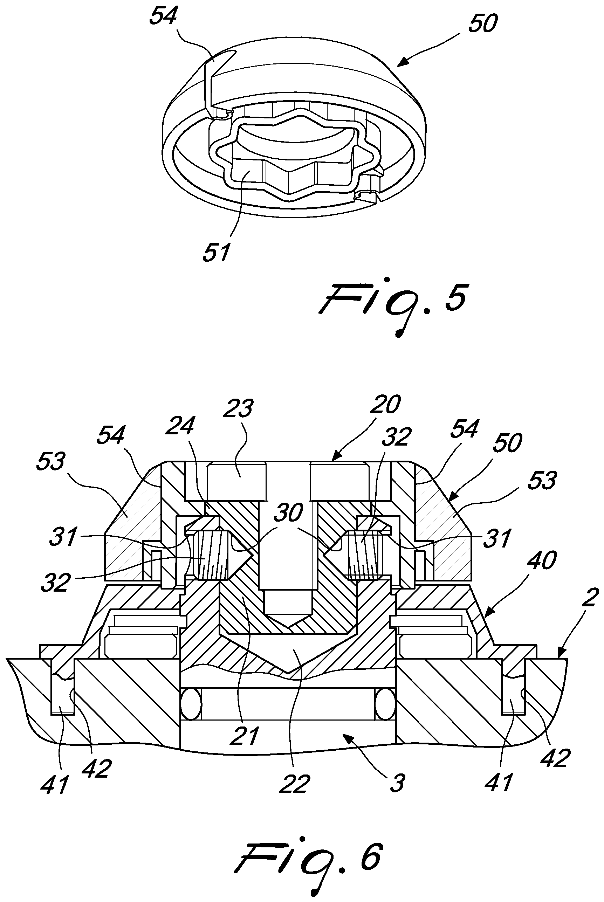

It is then possible to provide a cap 50 which forms internally a seat 51 formed by two square shapes, as shown in Figure 5, so that it can be positioned consistently with the arrangement of the engagement element. Moreover, there are provided further direction indicators provided by inserts 53, which can optionally have different colors and can be inserted in diametrical seats 54 provided on the cap 50, which can be connected by pressing on the end of the actuation shaft, so as to make the direction even more visible, since the inserts 53 are arranged in alignment with the end of the slot 23 and therefore able to better indicate the arrangement of the fluid-operated actuator.

With the description given above, it is possible to actuate the actuator manually, since the square portion 10 can be accessible, if the cap 50 is not fitted, or the cap 50, which has been positioned by pressing, can be removed rapidly to allow access of the tool for manual actuation.

Moreover, the provision of the engagement element 20 that enters the cavity formed in the end of the actuation shaft makes it possible to obtain a particularly stable mechanical coupling, which allows optimum actuation of the accessories, which is also improved by the fact that the engagement element can be made of metal, so that the mechanical stability is increased considerably and the actuation is faster and safer.

The possibility of making the engagement element that allows connection of the accessories of metallic material makes it possible to use this characteristic even in the presence of very high temperatures, obtaining a more precise alignment due to the fact that the alignment can be obtained by means of mechanical locking.

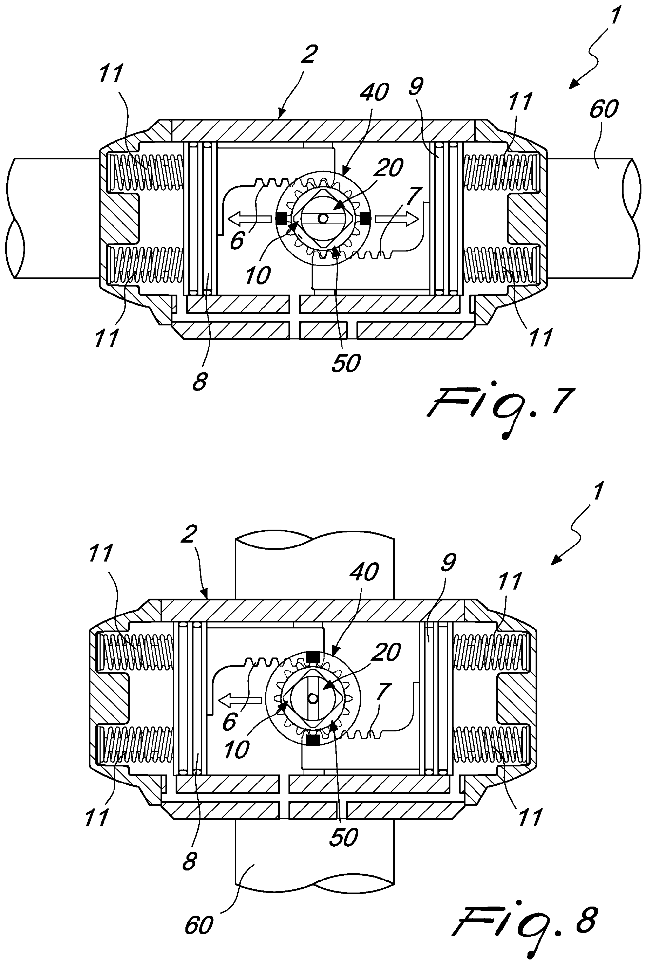

Moreover, as shown in Figures 7 and 8, the possibility of arranging the actuator parallel or at right angles to the duct 60 to which it is applied remains unchanged, and it is further possible to arrange the indicators independently of whether the opening action is clockwise or counterclockwise.

From what has been described above it is evident that the invention achieves the proposed aim and objects, and in particular the fact is stressed that an actuator is provided which is particularly functional, due to the possibility of inserting the engagement element at least partially within the cavity formed above the actuation shaft.

The invention thus conceived is susceptible of numerous modifications and variations, all of which are within the scope of the appended claims.

All the details may further be replaced with other technically equivalent elements.

In practice, the materials used, as long as they are compatible with the specific use, as well as the contingent shapes and dimensions, may be any according to requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A fluid-operated actuator (1) for controlling the actuation of valves in general, comprising an element for indicating the open and closed positions of the valve which can be associated with the end of an actuation shaft (3) of a valve, said actuation shaft (3) having, at one end, a square portion (10) and, in a central portion, at least one pinion (4, 5) connected to a rack (6, 7) of at least one actuation piston (8, 9), the actuator further comprising an engagement element (20), which has a base slot (23) for forming said indication element, **characterized in that** said engagement element (20) can be at least partially inserted in a cavity (22) formed within said square portion (10), said engagement element (20) being made of metallic material and defining recesses (30) for locking in said cavity (22), each recess being rotated by 45° with respect to the other about the axis defined by said actuation shaft (3), said square portion (10) being provided with threaded seats (31) for locking insertion therein of locking grubs (32) to obtain a firm positioning of the engagement element (20) with respect to the shaft (3).

2. The fluid-operated actuator according to claim 1, **characterized in that** said engagement element (20) comprises a cylindrical shank (21) which can be inserted in said cavity (22).

3. The fluid-operated actuator according to claim 2, **characterized in that** said engagement element (20) comprises a wider portion (24) which is connected axially to said cylindrical shank (21) and which forms said base slot (23).

4. The fluid-operated actuator according to one or more of the preceding claims 2-3, **characterized in that** said locking recesses (30) are arranged on the lateral surface of said cylindrical shank (21) for engagement with said locking grubs (32) which can engage in said threaded seats (31) formed on said actuation shaft (3).

5. The fluid-operated actuator according to one or more of the preceding claims, **characterized in that** it comprises a goniometric ring (40) provided with positioning pins (41) which can be inserted in positioning seats (42) formed in the body (2) of the actuator and can be arranged at the end of said actuation shaft (3) in a region that is not affected by said square portion (10).

6. The fluid-operated actuator according to one or more of the preceding claims, **characterized in that** it comprises a cap (50) which forms a seat with a double square shape (50) which is offset by 45° for coupling with said square portion (10), said cap (50) having diametrical seats (54) for the insertion of inserts (53) which are suitable to act as further direction indicators.

## Patentansprüche

1. Ein fluidbetätigter Aktuator (1) zur Steuerung der Betätigung von Ventilen im Allgemeinen, der ein Element zum Anzeigen der offenen und geschlossenen Positionen des Ventils umfasst, das mit dem Ende eines Betätigungsschafts (3) eines Ventils verbunden sein kann, wobei der Betätigungsschaft (3) an einem Ende einen quadratischen Abschnitt (10) und in einem zentralen Abschnitt mindestens ein Ritzel (4, 5) hat, verbunden mit einer Zahnstange (6, 7) mindestens eines Betätigungskolbens (8, 9), wobei der Aktuator weiter ein Eingriffselement (20) umfasst, das einen Basisschlitz (23) zum Bilden des Anzeigeelements hat, **dadurch gekennzeichnet, dass** das Eingriffselement (20) zumindest teilweise in einen Hohlraum (22) eingeführt werden kann, der in dem quadratischen Abschnitt (10) geformt ist, wobei das Eingriffselement (20) aus Metallmaterial besteht und Vertiefungen (30) zum Einrasten in den Hohlraum (22) bestimmt, wobei jede Vertiefung im Verhältnis zur anderen um 45° um die Achse gedreht ist, die von dem Betätigungsschaft (3) bestimmt wird, wobei der quadratische Abschnitt (10) mit Gewindesitzen (31) zum einrastenden Einführen von Verriegelungs-Gewindestiften (32) darin versehen ist, um eine feste Positionierung des Eingriffselements (20) im Verhältnis zum Schaft (3) zu erzielen.

2. Der fluidbetätigte Aktuator gemäß Anspruch 1, **dadurch gekennzeichnet, dass** das Eingriffselement (20) einen Zylinderschaft (21) umfasst, der in den Hohlraum (22) eingesetzt werden kann.

3. Der fluidbetätigte Aktuator gemäß Anspruch 2, **dadurch gekennzeichnet, dass** das Eingriffselement (20) einen breiteren Abschnitt (24) umfasst, der axial mit dem Zylinderschaft (21) verbunden ist und den Basisschlitz (23) bildet.

4. Der fluidbetätigte Aktuator gemäß einem oder mehreren der obigen Ansprüche 2-3, **dadurch gekennzeichnet, dass** die Einrast-Vertiefungen (30) an der Seitenfläche des Zylinderschafts (21) angeordnet sind zum Zwecke des Eingriffs mit den Verriegelungs-Gewindestiften (32), die in die an dem Betätigungsschaft (3) geformten Gewindesitze (31) eingreifen können.

5. Der fluidbetätigte Aktuator gemäß einem oder mehreren der obigen Ansprüche, **dadurch gekennzeichnet, dass** er einen Winkelmessring (40) umfasst, ausgestattet mit Positionierstiften (41), die in Positioniersitze (42) eingesetzt werden können, die im Körper (2) des Aktuators geformt sind, und am Ende des Betätigungsschafts (3) in einem Bereich angeordnet werden können, der durch den quadratischen Abschnitt (10) nicht beeinflusst wird.

6. Der fluidbetätigte Aktuator gemäß einem oder mehreren der obigen Ansprüche, **dadurch gekennzeichnet, dass** er eine Kappe (50) umfasst, die einen Sitz mit Doppelvierkantform (50) bildet, der zur Kopplung mit dem quadratischen Abschnitt (10) um 45° versetzt ist, wobei die Kappe (50) diametrale Sitze (54) für das Einführen von Einsätzen (53) hat, die geeignet sind, als zusätzliche Richtungsindikatoren zu wirken.

## Revendications

1. Actionneur actionné par fluide (1) destiné à commander l'actionnement de soupapes en général, comprenant un élément destiné à indiquer les positions ouverte ou fermée de la soupape, qui peut être associé à l'extrémité d'une tige d'actionnement (3) d'une soupape, ladite tige d'actionnement (3) présentant, au niveau d'une extrémité, une partie carrée (10) et, dans une partie centrale, un pignon (4, 5) au moins connecté à une crémaillère (6, 7) d'un piston d'actionnement (8, 9) au moins, l'actionneur comprenant en outre un élément de mise en prise (20), qui présente une fente de base (23) destinée à former ledit élément d'indication, **caractérisé en ce que** ledit élément de mise en prise (20) peut être inséré en partie au moins dans une cavité (22) formée à l'intérieur de ladite partie carrée (10), ledit élément de mise en prise (20) étant réalisé dans un matériau métallique et définissant des renfoncements (30) destinés à le bloquer dans ladite cavité (22), chaque renfoncement étant tourné de 45° par rapport à l'autre autour de l'axe défini par ladite tige d'actionnement (3), ladite partie carrée (10) étant dotée de siège filetés (31) destinés à bloquer à l'intérieur une insertion de vis sans tête de blocage (32) de façon à obtenir un positionnement ferme de l'élément de mise en prise (20) par rapport à la tige (3).

2. Actionneur actionné par fluide selon la revendication 1, **caractérisé en ce que** ledit élément de mise en prise (20) comprend une partie lisse cylindrique (21) qui peut être insérée dans ladite cavité (22).

3. Actionneur actionné par fluide selon la revendication 2, **caractérisé en ce que** ledit élément de mise en prise (20) comprend une partie plus large (24) qui est connectée de manière axiale à ladite partie lisse cylindrique (21), et qui forme ladite fente de base (23).

4. Actionneur actionné par fluide selon l'une quelconque des revendications précédentes 2 ou 3, **caractérisé en ce que** lesdits renfoncements de blocage (30) sont agencés sur la surface latérale de ladite partie lisse cylindrique (21) pour une mise en prise avec lesdites vis sans tête de blocage (32) qui peuvent venir en prise dans lesdits sièges filetés (31) formés sur ladite tige d'actionnement (3).

5. Actionneur actionné par fluide selon l'une quelconque des revendications précédentes, **caractérisé en ce qu'**il comprend un anneau goniométrique (40) doté de broches de positionnement (41) qui peuvent être insérées dans des sièges de positionnement (42) formés dans le corps (2) de l'actionneur, et qui peuvent être agencées au niveau de l'extrémité de ladite tige d'actionnement (3) dans une région qui n'est pas affectée par ladite partie carrée (10).

6. Actionneur actionné par fluide selon l'une quelconque des revendications précédentes, **caractérisé en ce qu'**il comprend un chapeau (50) qui forme un siège qui présente une forme carrée double (50) qui est décalée de 45° pour un accouplement avec ladite partie carrée (10), ledit chapeau (50) présentant des sièges diamétraux (54) pour l'insertion de pièces rapportées (53) qui conviennent pour agir en tant qu'indicateurs de direction supplémentaires.
